# EUROPÄISCHE PATENTSCHRIFT

(11) **EP 4 008 230 B1**
(45) Veröffentlichungstag und Bekanntmachung des Hinweises auf die Patenterteilung: **25.10.2023**
(21) Anmeldenummer: 21211374.0
(22) Anmeldetag: 30.11.2021
(51) Int. Cl.: A47L 11/33, A01D 34/00

(54) **SICH SELBSTTÄTIG FORTBEWEGENDES BODENBEARBEITUNGSGERÄT MIT MINDESTENS EINEM ABSTURZSENSOR**
SELF-PROPELLED SOIL WORKING IMPLEMENT WITH AT LEAST ONE FALL SENSOR
APPAREIL DE TRAITEMENT DU SOL AUTONOME POURVU D'AU MOINS UN CAPTEUR DE CHUTE

(30) Priorität: 03.12.2020 DE 102020132205
(43) Veröffentlichungstag der Anmeldung: 08.06.2022
(73) Patentinhaber: Vorwerk & Co. Interholding GmbH, 42275 Wuppertal (DE)
(72) Erfinder: Mosebach, Andrej, 59425 Unna (DE); Hayn, Henning, 40723 Hilden (DE)
(74) Vertreter: Müller, Enno

(56) Entgegenhaltungen:
- EP-B1- 1 437 958
- WO-A1-2009/036644
- CN-A- 109 416 543
- US-A1- 2018 184 586
- US-A1- 2020 315 087

## Beschreibung

### Gebiet der Technik

Die Erfindung betrifft ein sich selbsttätig fortbewegendes Bodenbearbeitungsgerät mit einem Gerätegehäuse, einer Antriebseinrichtung zur Fortbewegung des Bodenbearbeitungsgerätes innerhalb einer Umgebung, mindestens einem an einer einem Untergrund zugewandten Unterseite des Gerätegehäuses angeordneten Absturzsensor, welcher eingerichtet ist, einen Abstand des Bodenbearbeitungsgerätes zu dem Untergrund zu detektieren, und einer Recheneinrichtung, welche eingerichtet ist, den von dem Absturzsensor detektierten Abstand mit einem einen Abhang definierenden Grenzwert zu vergleichen und in dem Falle, dass der detektierte Abstand größer ist als der definierte Grenzwert, die Anwesenheit eines Abhangs als Detektionsergebnis festzustellen und einen Steuerbefehl zur Änderung einer Fortbewegung des Bodenbearbeitungsgerätes an die Antriebseinrichtung zu übermitteln.

### Stand der Technik

Sich selbsttätig fortbewegende Bodenbearbeitungsgeräte sind im Stand der Technik in unterschiedlichen Ausführungsformen bekannt (siehe EP 1437 958 B1).

Die Bodenbearbeitungsgeräte sind beispielsweise haushaltsübliche oder industriell genutzte Geräte, die eine Bodenbearbeitungstätigkeit wie beispielsweise Saugen, Wischen, Polieren, Schleifen, Ölen oder auch Kombinationen davon ausführen. Gemäß einer Ausführungsform kann das sich selbsttätig fortbewegende Bodenbearbeitungsgerät beispielsweise ein Saugroboter, Wischroboter oder ähnliches sein. Damit das Bodenbearbeitungsgerät nicht mit Hindernissen kollidiert, verfügt dieses über eine Detektionseinrichtung, die Hindernisse wie beispielsweise Wände, Möbel, Dekorationsgegenstände oder ähnliches in der Umgebung erkennen kann. Die Detektionseinrichtung kann beispielsweise eine Abstandsmesseinrichtung sein, die Abstände zu Hindernissen misst. Alternativ oder zusätzlich kann die Detektionseinrichtung auch Kontaktsensoren aufweisen, die einen Kontakt zu einem Hindernis detektieren können. Die Detektionseinrichtung kann eine Vielzahl von unterschiedlichen Sensoren aufweisen, die verschiedene Technologien zur Detektion der Umgebungsmerkmale nutzen. Übliche Detektionseinrichtungen weisen beispielsweise Laserabstandssensoren, insbesondere Triangulationssensoren, Ultraschallsensoren, Radarsensoren oder ähnliche auf.

Bei höher entwickelten Geräten ist es des Weiteren bekannt, dass die von der Detektionseinrichtung detektierten Umgebungsmerkmale zur Erstellung einer Umgebungskarte verwendet werden, die einen Grundriss der Umgebung des Bodenbearbeitungsgerätes zeigt und in welcher die Positionen von Hindernissen vermerkt sind. Anhand der erstellten Umgebungskarte kann die Recheneinrichtung eine aktuelle Position des Bodenbearbeitungsgerätes in der Umgebung bestimmen und gegebenenfalls eine Fortbewegungsroute durch die Umgebung planen. Es ist des Weiteren bekannt, dass die Detektionseinrichtung des Bodenbearbeitungsgerätes auch einen oder mehrere Absturzsensoren aufweist, der einen Abstand zu einem Untergrund misst und somit gegebenenfalls detektiert, dass sich das Bodenbearbeitungsgerät auf einen Abhang zubewegt. Ein solcher Abhang kann beispielsweise ein Treppenabgang, ein Randbereich einer Stufe, eines Podestes oder ähnliches sein. Wenn sich das Bodenbearbeitungsgerät auf einen solchen Abhang zubewegt, gelangt der Absturzsensor, welcher an der Unterseite des Gerätegehäuses angeordnet ist, über den Abhang und detektiert den veränderten, nämlich vergrößerten, Abstand zu dem Untergrund des Bodenbearbeitungsgerätes, nämlich beispielsweise der Oberseite einer nächsten Stufe. Die Recheneinrichtung des Bodenbearbeitungsgerätes erkennt daraufhin den Abhang und kann das Bodenbearbeitungsgerät zu einer Richtungsänderung veranlassen und somit den Absturz des Bodenbearbeitungsgerätes an dem Abhang verhindern. Das Bodenbearbeitungsgerät wendet somit an der Randkante des Abhangs bzw. fährt parallel zu dieser und setzt seine Fortbewegung fort. Üblicherweise weist das Bodenbearbeitungsgerät an mehreren Positionen seines Gerätegehäuses solche Absturzsensoren auf, um bei unterschiedlichen Fortbewegungsrichtungen einen Schutz vor Absturz des Bodenbearbeitungsgerätes zu bieten.

Obwohl sich die Absturzsensoren im Stand der Technik bewährt haben, besteht dennoch grundsätzlich die Gefahr, dass ein Absturzsensor defekt ist und die Annäherung des Bodenbearbeitungsgerätes an einen Abhang nicht mehr detektieren kann. In diesem Fall könnte es passieren, dass das Bodenbearbeitungsgerät einen Abhang herabfällt und dabei Beschädigungen hervorruft oder gar eine Gefahr für Personen darstellt.

### Zusammenfassung der Erfindung

Ausgehend von dem vorgenannten Stand der Technik ist es Aufgabe der Erfindung, ein sich selbsttätig fortbewegendes Bodenbearbeitungsgerät zu schaffen, bei welchem Fehlfunktionen des Absturzsensors zuverlässig detektiert werden können.

Zur Lösung der vorgenannten Aufgabe wird vorgeschlagen, dass das Bodenbearbeitungsgerät an der Unterseite des Gerätegehäuses eine Mehrzahl von in Richtung einer Umfangskontur der Unterseite hintereinander angeordneten Absturzsensoren aufweist, wobei die Recheneinrichtung eingerichtet ist, ein Detektionsergebnis eines Absturzsensors mit einem vorbekannten Referenzergebnis zu vergleichen und in dem Fall, dass das Detektionsergebnis nicht mit dem Referenzergebnis übereinstimmt eine Fehlfunktion des Absturzsensors festzustellen, wobei die Recheneinrichtung eingerichtet ist, während einer Fortbewegung des Bodenbearbeitungsgerätes zeitlich aufeinanderfolgend von demselben Absturzsensor detektierte Abstände miteinander zu vergleichen und in dem Fall, dass die Abstände identisch sind, eine Fehlfunktion des Absturzsensors festzustellen, und/oder wobei die Recheneinrichtung eingerichtet ist, ein Detektionsergebnis eines Absturzsensors mit einem Detektionsergebnis mindestens eines dem Absturzsensor in Fortbewegungsrichtung nacheilenden weiteren Absturzsensors zu vergleichen und in dem Fall, dass der nacheilende Absturzsensor einen Abhang detektiert, ohne dass zuvor der vorauseilende Absturzsensor den Abhang detektiert hat, eine Fehlfunktion des vorauseilenden Absturzsensors festzustellen, wobei das Bodenbearbeitungsgerät zunächst weiterbetrieben wird, unter der Maßgabe, dass der nacheilende Absturzsensor nun die Sicherungsfunktion des defekten vorauseilenden Absturzsensors übernimmt.

Erfindungsgemäß ist die Recheneinrichtung somit ausgebildet, das von einem Absturzsensor ermittelte Detektionsergebnis, nämlich ein Ergebnis darüber, ob ein Abhang im Bereich des Bodenbearbeitungsgerätes existiert oder nicht, zu verifizieren. Die Verifikation erfolgt dabei durch einen Vergleich des Detektionsergebnisses mit einem vorbekannten Referenzergebnis oder mit einem Detektionsergebnis eines anderen Absturzsensors, welcher dem zu überprüfenden Absturzsensor nacheilt, d. h. zeitlich später in den Bereich des Abhangs gelangt. In dem zweitgenannten Fall dient das Detektionsergebnis des nacheilenden Absturzsensors somit als Referenzergebnis. Dabei liegt die Erkenntnis zugrunde, dass ein Abhang des Untergrundes zunächst in den Detektionsbereich eines vorauseilenden Absturzsensors des Bodenbearbeitungsgerätes gelangt, nämlich einem Absturzsensor, welcher weiter außen an der Unterseite des Gerätegehäuses angeordnet ist, und dann erst - bei fortgesetzter Fortbewegung des Bodenbearbeitungsgerätes in dieselbe Fortbewegungsrichtung - in den Detektionsbereich des nacheilenden Absturzsensors, welcher weiter innen an der Unterseite des Gerätegehäuses angeordnet ist. Sofern beide Absturzsensoren, d. h. sowohl der vorauseilende, als auch der nacheilende Absturzsensor, ordnungsgemäß funktionieren, detektiert zunächst der vorauseilende Absturzsensor den Abhang und anschließend der nacheilende Absturzsensor. Sofern jedoch der vorauseilende Absturzsensor defekt ist, wird der Abhang nur durch den nacheilenden Absturzsensor detektiert und es kann darauf geschlossen werden, dass der vorauseilende Absturzsensor offenbar defekt ist. Des Weiteren kann die Funktionsfähigkeit eines Absturzsensors auch dann überprüft werden, wenn das Bodenbearbeitungsgerät nur über diesen einen Absturzsensor verfügt. In diesem Fall wird das mittels der Recheneinrichtung ermittelte Detektionsergebnis des Absturzsensors mit einem definierten Referenzergebnis verglichen. Dies kann beispielsweise dadurch erfolgen, dass das Bodenbearbeitungsgerät an einen bekannten Teilbereich der Umgebung fährt, wo ein Abhang besteht. Dieser Abhang kann dann genutzt werden, um die Funktionsfähigkeit des Absturzsensors zu verifizieren. Sofern sich das Bodenbearbeitungsgerät mit demjenigen Teilbereich der Unterseite des Gerätegehäuses, welcher den Absturzsensor trägt, über den Abhang bewegt, muss der funktionsfähige Absturzsensor den Abhang detektieren. Wenn dies nicht der Fall ist, kann darauf geschlossen werden, dass der Absturzsensor offenbar defekt ist. Gemäß einer weiteren Ausführung kann die Recheneinrichtung des Bodenbearbeitungsgerätes ausgebildet sein, beide vorgenannten Verifizierungsvarianten miteinander zu kombinieren, nämlich das Detektionsergebnis eines Absturzsensors sowohl mit einem statischen Referenzergebnis zu vergleichen, als auch mit einem Detektionsergebnis eines anderen Absturzsensors, welcher dem zu überprüfenden Absturzsensor nacheilt. Dadurch kann eine maximal hohe Sicherheit bei der Anwendung des Bodenbearbeitungsgerätes gewährleistet werden. Eine Abweichung des Detektionsergebnisses eines Absturzsensors von plausiblen Detektionsergebnissen kann zuverlässig bestimmt werden.

Durch die Erfindung können verschiedene Arten von Fehlfunktionen des Absturzsensors festgestellt werden. Hierzu zählen Sensorfehler, bei welchen der Absturzsensor dauerhaft einen minimalen oder maximalen Abstand zu einem Untergrund misst. Darüber hinaus kann der Absturzsensor bei einem Fehler auch dauerhaft einen konstanten Wert zwischen einem minimalen und einem maximalen Abstand anzeigen. Die Auswertung kann dabei jeweils so erfolgen, dass die Recheneinrichtung einen von einem ersten Absturzsensor detektierten Abstandswert mit einem an demselben Ort von einem zweiten Absturzsensor detektierten Abstandswert vergleicht, indem eine Differenz der beiden Detektionssignale ermittelt wird. Sofern die Differenz nicht gleich Null ist oder zumindest oberhalb eines tolerierbaren Schwellenwertes liegt, kann auf einen Fehler des ersten oder zweiten Absturzsensors geschlossen werden, je nachdem welcher Abstandswert in Abhängigkeit von einer momentanen Betriebsart oder einem momentanen Aufenthaltsort des Bodenbearbeitungsgerätes plausibler ist.

Des Weiteren wird vorgeschlagen, dass die Unterseite des Gerätegehäuses mindestens vier Absturzsensoren aufweist, welche sich bezogen auf eine geometrische Mitte der Unterseite im Wesentlichen paarweise gegenüberliegen, so dass einer jeden von vier Seiten der Umfangskontur zumindest ein Absturzsensor zugeordnet ist. Bei dieser Ausgestaltung ist das Bodenbearbeitungsgerät von möglichst allen Seiten aus gegen einen Absturz gesichert. Bei einem im Wesentlichen quadratischen Gerätegehäuse kann jeder Seite der Umfangskontur ein Absturzsensor zugeordnet sein. Bei einem im Wesentlichen runden Gerätegehäuse kann jeder Umfangsteilabschnitt, welcher einen Winkelbereich von 90 Grad einschließt, einen Absturzsensor aufweisen. Die Absturzsensoren können bezogen auf die geometrische Mitte symmetrisch oder auch unsymmetrisch angeordnet sein. Wesentlich ist, dass jeder Seite ein Absturzsensor zugeordnet ist. Bei einer gedachten Verbindungsgeraden, welche einen Absturzsensor mit der geometrischen Mitte verbindet, entsteht bei dieser Ausführungsform im Wesentlichen eine kreuzweise Anordnung der Absturzsensoren. Ein derart ausgebildetes Bodenbearbeitungsgerät kann vorteilhaft gegen Absturz gesichert werden, indem die Signale von zwei sich bezogen auf die geometrische Mitte gegenüberliegenden Absturzsensoren mit einem Signal eines der Verbindungsgeraden in Fortbewegungsrichtung vorauseilenden Absturzsensors verglichen werden. Wenn beide der zwei sich gegenüberliegenden Absturzsensoren in etwa zeitgleich einen Abhang detektieren, muss unweigerlich auch der in Fortbewegungsrichtung vorgelagerte weitere Absturzsensor zuvor einen Abhang detektiert haben. Wenn dies nicht der Fall ist, kann die Recheneinrichtung des Bodenbearbeitungsgerätes darauf schließen, dass der vorgelagerte Absturzsensor defekt ist. Je nach einer aktuellen Fortbewegungsrichtung des Bodenbearbeitungsgerätes werden zumindest die Detektionsergebnisse derjenigen Absturzsensoren miteinander verglichen, welche einem in Fahrtrichtung vorauseilenden Teilbereich der Umfangskontur am nächsten liegen. Dabei empfiehlt es sich jeweils, Vergleichspaare aus zwei Absturzsensoren zu bilden, deren gedachte Verbindungsgerade quer zu der momentanen Bewegungsrichtung des Bodenbearbeitungsgerätes liegt. Zusätzlich kann das Signal eines der Verbindungsgeraden vorauseilenden weiteren Absturzsensors mit den Signalen der Absturzsensoren der Verbindungsgeraden verglichen werden, da der vorauseilende Absturzsensor bei ordnungsgemäßer Funktion einen Abhang detektiert, bevor die nachfolgenden Absturzsensoren den Abhang detektieren können. Das Bodenbearbeitungsgerät kann zudem nicht nur vier Absturzsensoren aufweisen, sondern auch fünf oder mehr. Besonders bevorzugt ist die Anzahl der an der Unterseite des Gerätegehäuses verbauten Absturzsensoren durch zwei teilbar, so dass sich jeweils Paare von Absturzsensoren bilden lassen, die einer Symmetrie der Anordnung von Absturzsensoren folgen.

Es kann vorgesehen sein, dass das Bodenbearbeitungsgerät an der Unterseite des Gerätegehäuses eine Mehrzahl von in Richtung einer Umfangskontur der Unterseite hintereinander angeordneten äußeren Absturzsensoren und eine Mehrzahl von bezogen auf die Umfangskontur und relativ zu den äußeren Absturzsensoren nach innen versetzten inneren Absturzsensoren aufweist, wobei die Recheneinrichtung eingerichtet ist, ein Detektionsergebnis eines äußeren Absturzsensors mit einem Detektionsergebnis eines dem äußeren Absturzsensor örtlich zugeordneten inneren Absturzsensors zu vergleichen und in dem Fall, dass der innere Absturzsensor einen Abhang detektiert und der zugeordnete äußere Absturzsensor keinen Abhang detektiert, eine Fehlfunktion des äußeren Absturzsensors festzustellen. Bei dieser Ausgestaltung stellen die inneren Absturzsensoren eine redundante Sensorik zur Sicherung des Bodenbearbeitungsgerätes vor einem Absturz an einem Abhang dar. Die Absturzsensoren sind entlang der Umfangskontur in zwei Schleifen angeordnet, wobei eine äu-ßere Schleife näher an der Umfangskontur liegt als eine innere Schleife. Die äu-ßere Schleife weist die äußeren Absturzsensoren auf, während die innere Schleife die inneren Absturzsensoren aufweist. Bevorzugt befindet sich jeweils ein innerer Absturzsensor im Umfeld eines äußeren Absturzsensors. Dabei kann der innere Absturzsensor bezogen auf die Umfangsrichtung des Gerätegehäuses etwas zu dem äußeren Absturzsensor versetzt sein. Wesentlich ist, dass kein für die Funktion der Absturzsicherung übermäßiger Abstand zwischen dem äußeren Absturzsensor und dem inneren Absturzsensor besteht, damit das Bodenbearbeitungsgerät während einer Fortbewegung keine wesentliche Strecke zurücklegt, bis der innere Absturzsensor den Abhang detektieren kann. Nur so kann sichergestellt werden, dass es bei einer Fehlfunktion des äu-ßeren Absturzsensors innerhalb kurzer Zeit zu einer Detektion des Abhangs durch den inneren Absturzsensor kommt.

In diesem Zusammenhang wird bevorzugt vorgeschlagen, dass jeweils ein innerer Absturzsensor einem äußeren Absturzsensor bezogen auf eine Position an der Unterseite des Gerätegehäuses räumlich zugeordnet ist, so dass der innere Absturzsensor und der äußere Absturzsensor ein Sensorpaar bilden. Jeweils ein äußerer Absturzsensor wird somit durch einen inneren Absturzsensor gesichert, welcher die Absturzgefahr stellvertretend für einen defekten äußeren Absturzsensor messen kann. Darüber hinaus ermöglicht der innere Absturzsensor die Prüfung der Funktionsfähigkeit des äußeren Absturzsensors durch Signalvergleich.

Es kann darüber hinaus vorgesehen sein, dass die inneren Absturzsensoren so an der Unterseite des Gerätegehäuses angeordnet sind, dass eine Verbindungsgerade zwischen zwei in Umfangsrichtung der Umfangskontur benachbarten inneren Absturzsensoren einen an der Unterseite definierten Schwerpunktbereich, welcher eine vertikale Projektion des Massenschwerpunktes des Bodenbearbeitungsgerätes in die Ebene der Absturzsensoren aufweist, nicht schneidet, insbesondere auch nicht tangiert. Gemäß dieser Ausgestaltung sind die inneren Absturzsensoren, und damit auch die äußeren Absturzsensoren, so um eine vertikale Projektion des Massenschwerpunktes in die Sensorebene angeordnet, dass Verbindungsgeraden zwischen jeweils in Umfangsrichtung aufeinanderfolgenden Absturzsensoren den definierten Schwerpunktbereich nicht berühren. Der Schwerpunktbereich ist bezogen auf die vertikale Projektion des Massenschwerpunktes so definiert, dass ein Absturz des Bodenbearbeitungsgerätes an einem Abhang wahrscheinlich ist, wenn eine Absturzkante in den definierten Schwerpunktbereich eindringt, d. h. vertikal unter diesem liegt. Daher wird eine bevorstehende Absturzsituation rechtzeitig erkannt, wenn der Abhang detektiert wird, solange sich der Schwerpunktbereich noch nicht über der Randkante des Abhangs befindet. Bezogen auf eine Blickrichtung auf das Bodenbearbeitungsgerät, bei welcher der Betrachter vertikal von oben auf das auf dem Untergrund stehende Bodenbearbeitungsgerät blickt, liegt der Massenschwerpunkt des Bodenbearbeitungsgerätes innerhalb des definierten Schwerpunktbereiches. Wenn die inneren Absturzsensoren so außerhalb des definierten Schwerpunktbereiches an dem Gerätegehäuse angeordnet sind, dass eine gedachte Verbindungsgerade zwischen benachbarten Absturzsensoren den Schwerpunktbereich nicht schneidet oder zusätzlich auch nicht tangiert, kann das Bodenbearbeitungsgerät nicht über einen Abhang stürzen. Vielmehr würde eine Randkante des Abhangs zuvor in den Detektionsbereich eines inneren Absturzsensors gelangen, bevor der Massenschwerpunkt des Bodenbearbeitungsgerätes relativ zu dem Abhang so liegt, dass das Bodenbearbeitungsgerät das Gleichgewicht verlieren würde. Der definierte Schwerpunktbereich kann somit auch als Absturzbereich bezeichnet werden, in dem die Anwesenheit eines Randbereiches eines Abhangs wahrscheinlich zu einem Kippen des Bodenbearbeitungsgerätes führen würde.

Des Weiteren kann vorgesehen sein, dass die Recheneinrichtung eingerichtet ist, während einer Fortbewegung des Bodenbearbeitungsgerätes zeitlich aufeinanderfolgend von demselben Absturzsensor detektierte Abstände miteinander zu vergleichen und in dem Fall, dass die Abstände identisch sind, eine Fehlfunktion des Absturzsensors festzustellen. Das Detektionssignal eines Absturzsensors wird somit mit einem Referenzergebnis verglichen, welches ein zeitlich früheres Detektionssignal desselben Absturzsensors ist. Bei dieser Ausführungsform ist es nicht erforderlich, einen zu dem zu überprüfenden Absturzsensor redundanten zusätzlichen Absturzsensor zu verwenden. Es werden stattdessen zeitlich aufeinanderfolgende Detektionssignale desselben Absturzsensors miteinander verglichen, nämlich detektierte Abstandswerte zu einem Untergrund des Bodenbearbeitungsgerätes. Sofern sich das Bodenbearbeitungsgerät relativ zu dem Untergrund fortbewegt, muss es alleine aufgrund eines messtechnischen Rauschens der Absturzsensoren zu einer geringfügigen Änderung des gemessenen Abstandswertes kommen. Sofern eine solche Variation nicht detektiert werden kann, ist darauf zu schließen, dass ein Sensorfehler vorliegt. In diesem Zusammenhang empfiehlt sich insbesondere, dass die Recheneinrichtung einen Schwellwert für das Rauschen des Absturzsensors kennt, so dass das Rauschen von einer tatsächlichen Existenz eines Abhangs unterschieden werden kann.

Die Recheneinrichtung kann des Weiteren eingerichtet sein, bei Feststellen einer Fehlfunktion des Absturzsensors die Fortbewegung des Bodenbearbeitungsgerätes zu stoppen und/oder ein Fehlersignal an einen Nutzer des Bodenbearbeitungsgerätes zu übermitteln. Im Falle einer Fehlfunktion greift somit eine Sicherheitsmaßnahme des Bodenbearbeitungsgerätes und die Recheneinrichtung stoppt gemäß einer möglichen Handlungsweise die Antriebseinrichtung des Bodenbearbeitungsgerätes, so dass es zu einem Stillstand kommt. Es erfolgt somit eine Sicherheitsabschaltung des Bodenbearbeitungsgerätes bzw. zumindest eine Sicherheitsabschaltung der Antriebseinrichtung, so dass ein Absturz des Bodenbearbeitungsgerätes an dem Abhang verhindert ist. Alternativ oder zusätzlich kann vorgesehen sein, dass die Recheneinrichtung eingerichtet ist, ein Fehlersignal an einen Nutzer des Bodenbearbeitungsgerätes zu übermitteln, wenn eine Fehlfunktion eines Absturzsensors detektiert wird. Alternativ oder zusätzlich kann die Recheneinrichtung somit anstatt oder zusätzlich zu dem Stoppen der Fortbewegung des Bodenbearbeitungsgerätes einen Fehlerfall an einen Nutzer des Bodenbearbeitungsgerätes melden. Gemäß einer Ausführung kann die Antriebseinrichtung des Bodenbearbeitungsgerätes sofort gestoppt und ein Fehlersignal an den Nutzer übermittelt werden. Alternativ ist es jedoch auch möglich, dass das Bodenbearbeitungsgerät zunächst weiter betrieben wird, unter der Maßgabe, dass ein anderer Absturzsensor nun die Sicherungsfunktion des defekten Absturzsensors übernimmt. Ein Fehlersignal, d. h. die Information über den Fehler der Absturzsensorik, kann den Nutzer dann darüber informieren, dass das Bodenbearbeitungsgerät von einem Fachbetrieb in Bezug auf die Funktionssicherheit kontrolliert werden sollte. Das Fehlersignal kann dem Nutzer in Form einer akustischen oder optischen Information mitgeteilt werden. Beispielsweise kann das Bodenbearbeitungsgerät einen Lautsprecher oder ein Display aufweisen, welches den aufgetretenen Fehler in Sprach- oder Textform ausgibt. Des Weiteren ist es auch möglich, dass das Bodenbearbeitungsgerät eine Kommunikationsschnittstelle aufweist, die das Fehlersignal an ein in Kommunikationsverbindung mit dem Bodenbearbeitungsgerät stehendes externes Endgerät des Nutzers übermittelt. Beispielsweise kann das externe Endgerät ein Mobiltelefon, ein Tablet-Computer oder ein anderes mobiles oder stationäres Gerät des Nutzers sein, welches geeignet ist, das Fehlersignal zu empfangen und dieses dem Nutzer zur Kenntnis zu bringen. Insbesondere wird vorgeschlagen, dass das externe Endgerät des Nutzers eine Applikation aufweist, die für die Kommunikation mit dem Bodenbearbeitungsgerät, insbesondere dessen Rechenrichtung, optimiert ist. Über die Applikation kann der Nutzer beispielsweise auch Steuerbefehle an die Recheneinrichtung des Bodenbearbeitungsgerätes übermitteln.

Neben dem zuvor beschriebenen Bodenbearbeitungsgerät wird mit der Erfindung des Weiteren auch ein System aus einem sich selbsttätig fortbewegenden Bodenbearbeitungsgerät der zuvor beschriebenen Art und einer Basisstation zum Ausführen einer Servicetätigkeit an dem Bodenbearbeitungsgerät vorgeschlagen, wobei die Basisstation eine von dem Bodenbearbeitungsgerät befahrbare Referenzfläche aufweist, und wobei die Recheneinrichtung des Bodenbearbeitungsgerätes eingerichtet ist, einen von einem Absturzsensor des Bodenbearbeitungsgerätes detektierten Abstand zu der Referenzfläche mit einem definierten Referenzergebnis zu vergleichen und in dem Fall einer Abweichung eine Fehlfunktion des Absturzsensors festzustellen. Gemäß dieser Ausgestaltung verfügt die Basisstation über eine Referenzfläche, an welcher das Bodenbearbeitungsgerät die Funktionsfähigkeit der Absturzsensoren überprüfen kann. Der Recheneinrichtung ist bekannt, welchen Abstand ein Absturzsensor des Bodenbearbeitungsgerätes in einer bestimmten Position und Orientierung des Bodenbearbeitungsgerätes an der Basisstation zu der Referenzfläche hat. Bei dieser Ausgestaltung ist es nicht erforderlich, dass das Bodenbearbeitungsgerät mehrere Absturzsensoren aufweist, um die Plausibilität eines Detektionsergebnisses eines Absturzsensors zu prüfen. Vielmehr dient die Referenzfläche der Basisstation als Referenzergebnis. Die Basisstation kann beispielsweise eine Ladestation für einen Akkumulator des Bodenbearbeitungsgerätes oder auch eine Station zum Ausführen einer oder mehrerer weiterer Servicetätigkeiten an dem Bodenbearbeitungsgerät bzw. dessen Komponenten sein. Die Referenzfläche der Basisstation kann beispielsweise eine Parkfläche sein, auf welcher sich das Bodenbearbeitungsgerät positioniert, beispielsweise um einen Akkumulator an der Basisstation zu laden. In dieser definierten Position ist dann ein Abstand zwischen dem jeweiligen Absturzsensor und der Referenzfläche bekannt. Eine Überprüfung der Funktionsfähigkeit der Absturzsensoren lässt sich dann während der Servicetätigkeit durch Vergleichen des von dem Absturzsensor des Bodenbearbeitungsgerätes detektierten Abstands mit einem bekannten Referenzabstand zu der Referenzfläche durchführen. Wenn der von dem Absturzsensor detektierte Abstandswert von dem definierten Referenzwert abweicht, kann auf einen Fehlerzustand des Absturzsensors geschlossen werden. Gegebenenfalls kann ein Schwellwert definiert sein, welcher bestimmt, wann eine Abweichung als relevant eingestuft wird.

Insbesondere kann vorgesehen sein, dass die Referenzfläche einen Abhang aufweist, wobei der Abhang so positioniert ist, dass sich der Absturzsensor des Bodenbearbeitungsgerätes bei einem Auffahren auf die Referenzfläche über den Abhang hinaus verlagert. Gemäß dieser Ausgestaltung verfügt die Referenzfläche über einen Abhang, an welchem die Funktionsfähigkeit des Absturzsensors überprüft werden kann. Die Recheneinrichtung verfügt über eine Information darüber, welche Höhe der Abhang aufweist, so dass der von dem Absturzsensor an dem Abhang gemessene Abstand mit diesem Referenzwert verglichen werden kann. Die Referenzfläche ist vorzugsweise so ausgestaltet, dass sich das Bodenbearbeitungsgerät mit einem einen oder mehrere Absturzsensoren aufweisenden Teilbereich des Gerätegehäuses über den Abhang verlagern kann. Beispielsweise kann ein als Standfläche für das Bodenbearbeitungsgerät dienender Teilbereich der Referenzfläche eine Länge und/oder Breite aufweisen, welche größer ist als ein Abstand zweier in Fahrtrichtung hintereinander bzw. nebeneinander angeordneter Räder des Bodenbearbeitungsgerätes, jedoch geringer ist als die Außenkontur des Gerätegehäuses des Bodenbearbeitungsgerätes, so dass derjenige Teilbereich der Unterseite des Gerätegehäuses, an welchem ein Absturzsensor angeordnet ist oder mehrere Absturzsensoren angeordnet sind, über den Abhang hinausragt. Besonders bevorzugt entspricht die Stellung des Bodenbearbeitungsgerätes zur Prüfung der Sensorfunktion dann einer Position und Orientierung des Bodenbearbeitungsgerätes, welche das Bodenbearbeitungsgerät ohnehin bei dem Empfang einer Servicetätigkeit einnimmt, beispielsweise eine Dockingposition zum Aufladen eines Ackumulators des Bodenbearbeitungsgerätes.

Schließlich wird mit der Erfindung auch ein Verfahren zum Überprüfen der Funktionsfähigkeit eines Absturzsensors eines sich selbsttätig fortbewegenden Bodenbearbeitungsgerätes vorgeschlagen, wobei das Bodenbearbeitungsgerät ein Gerätegehäuse, eine Antriebseinrichtung zur Fortbewegung des Bodenbearbeitungsgerätes innerhalb einer Umgebung, mindestens einen an einer einem Untergrund zugewandten Unterseite des Gerätegehäuses angeordneten Absturzsensor und eine Recheneinrichtung aufweist, wobei der Absturzsensor einen Abstand des Bodenbearbeitungsgerätes zu dem Untergrund detektiert, und wobei die Recheneinrichtung den von dem Absturzsensor detektierten Abstand mit einem einen Abhang definierenden Grenzwert vergleicht und in dem Falle, dass der Abstand größer ist als der definierte Grenzwert, die Anwesenheit eines Abhangs als Detektionsergebnis feststellt und einen Steuerbefehl zur Änderung einer Fortbewegung des Bodenbearbeitungsgerätes an die Antriebseinrichtung übermittelt. Erfindungsgemäß ist vorgesehen, dass das Bodenbearbeitungsgerät an der Unterseite des Gerätegehäuses eine Mehrzahl von in Richtung einer Umfangskontur der Unterseite hintereinander angeordneten Absturzsensoren aufweist, wobei die Recheneinrichtung ein Detektionsergebnis eines Absturzsensors mit einem definierten Referenzergebnis vergleicht und in dem Fall, dass das Detektionsergebnis nicht mit dem Referenzergebnis übereinstimmt eine Fehlfunktion des Absturzsensors feststellt, wobei die Recheneinrichtung während einer Fortbewegung des Bodenbearbeitungsgerätes zeitlich aufeinanderfolgend von demselben Absturzsensor detektierte Abstände miteinander vergleicht und in dem Fall, dass die Abstände identisch sind, eine Fehlfunktion des Absturzsensors feststellt, und/oder wobei die Recheneinrichtung ein Detektionsergebnis eines Absturzsensors mit einem Detektionsergebnis mindestens eines dem Absturzsensor in Fortbewegungsrichtung nacheilenden weiteren Absturzsensors vergleicht und in dem Fall, dass der nacheilende Absturzsensor einen Abhang detektiert, ohne dass zuvor der vorauseilende Absturzsensor den Abhang detektiert hat, eine Fehlfunktion des vorauseilenden Absturzsensors feststellt, wobei das Bodenbearbeitungsgerät zunächst weiterbetrieben wird, unter der Maßgabe, dass der nacheilende Absturzsensor nun die Sicherungsfunktion des defekten vorauseilenden Absturzsensors übernimmt. Das vorgeschlagene Verfahren ist bevorzugt ein Verfahren zum Betrieb eines sich selbsttätig fortbewegenden Bodenbearbeitungsgerätes gemäß der zuvor beschriebenen Art. Zur Vermeidung von Wiederholungen wird in Bezug auf das Verfahren auf die vorstehende Beschreibung des erfindungsgemäßen Bodenbearbeitungsgerätes verwiesen. Die Merkmale und Vorteile gelten entsprechend auch für das erfindungsgemäße Verfahren.

### Kurze Beschreibung der Zeichnungen

Im Folgenden wird die Erfindung anhand von Ausführungsbeispielen näher erläutert. Es zeigen:
- Fig. 1: ein erfindungsgemäßes Bodenbearbeitungsgerät gemäß einer ersten Ausführungsform,
- Fig. 2: eine Unteransicht des Bodenbearbeitungsgerätes gemäß Fig. 1,
- Fig. 3a: das Bodenbearbeitungsgerät in einer Unteransicht bei Annäherung an einen Abhang,
- Fig. 3b: das Bodenbearbeitungsgerät gemäß Fig. 3a bei teilweisem Überschreiten des Abhangs,
- Fig. 3c: das Bodenbearbeitungsgerät gemäß den Fig. 3a und 3b bei fortgesetztem teilweisen Überschreiten des Abhangs,
- Fig. 4: eine Unteransicht eines Bodenbearbeitungsgerätes gemäß einer weiteren Ausführungsform,
- Fig. 5: das Bodenbearbeitungsgerät gemäß Fig. 4 an einer Basisstation.

### Beschreibung der Ausführungsformen

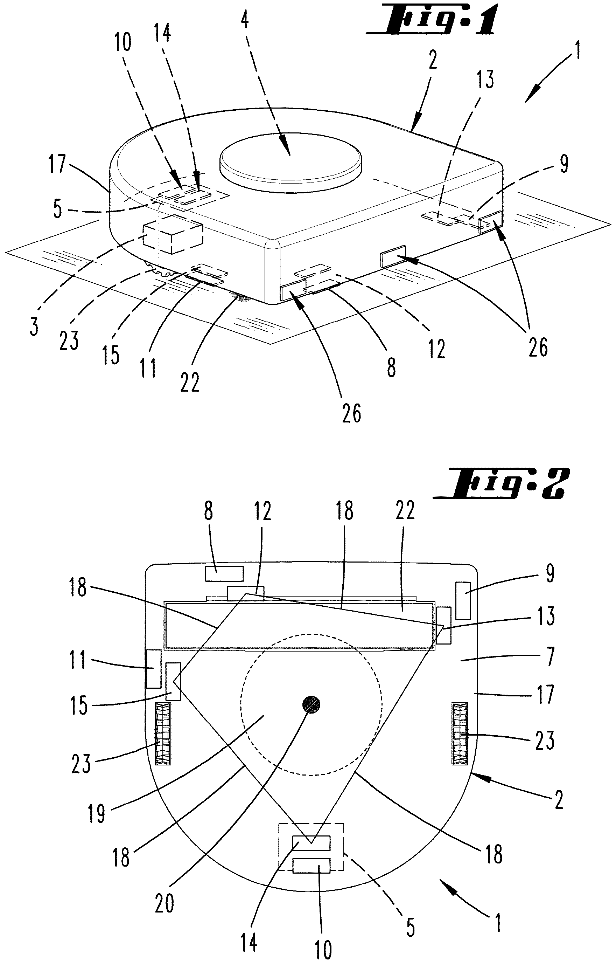

Figur 1 zeigt beispielhaft ein erfindungsgemäßes Bodenbearbeitungsgerät 1, welches hier als sich selbsttätig fortbewegender Reinigungsroboter ausgebildet ist. Das Bodenbearbeitungsgerät 1 verfügt über ein Gerätegehäuse 2 und eine Antriebseinrichtung 3, welche zum Antrieb von an einer Unterseite 7 des Gerätegehäuses 2 angeordneten Rädern 23 dient. Das Bodenbearbeitungsgerät 1 weist einen nicht dargestellten Akkumulator auf, welcher einer Energieversorgung für die Antriebseinrichtung 3 sowie weiterer elektrischer Verbraucher des Bodenbearbeitungsgerätes 1 dient. Die Antriebseinrichtung 3 weist hier beispielsweise einen nicht näher dargestellten Elektromotor auf. An dem Gerätegehäuse 2 ist des Weiteren ein Reinigungselement 22 beweglich gelagert, welches hier als rotierende Borstenwalze ausgebildet ist. Des Weiteren kann das Bodenbearbeitungsgerät 1 ein Gebläse aufweisen (nicht dargestellt), um beispielsweise Sauggut in einen Sauggutsammelbehälter überführen zu können. Alternativ zu der Ausbildung als Saugreinigungsgerät kann das Bodenbearbeitungsgerät 1 jedoch auch als beliebiges anderes sich selbsttätig fortbewegendes Bodenbearbeitungsgerät 1 ausgebildet sein, beispielsweise als Wischgerät, Poliergerät oder ähnliches.

Damit sich das Bodenbearbeitungsgerät 1 ohne Kollision mit Hindernissen auf einem Untergrund 6 fortbewegen kann, verfügt das Bodenbearbeitungsgerät 1 über eine Detektionseinrichtung 4 sowie Kollisionssensoren 26 und eine Recheneinrichtung 5, welche dazu ausgebildet ist, die von der Detektionseinrichtung 4 und den Kollisionssensoren 26 detektieren Signale auszuwerten. Die Detektionseinrichtung 4 ist hier beispielsweise eine Abstandsmesseinrichtung, die Abstände zu in der Umgebung vorhandenen Hindernissen misst. Die Abstandsmesseinrichtung ist hier beispielsweise als Laserabstandsmesseinrichtung, insbesondere Triangulationseinrichtung mit einer oberseitig auf dem Gerätegehäuse 2 angeordneten 360°-Lichtaustrittsöffnung, ausgebildet. Die von der Abstandsmesseinrichtung detektierten Abstandswerte werden von der Recheneinrichtung 5 verwendet, um eine Umgebungskarte zu erstellen, welche neben einem Grundriss der Umgebung, beispielsweise einem Raum oder einer Wohnung, zusätzlich auch Positionen und Ausmaße von in dem Raum bzw. der Wohnung vorhandenen Hindernissen enthält. Die erstellte Umgebungskarte dient der Recheneinrichtung 5 des Bodenbearbeitungsgerätes 1 zur Navigation und Selbstlokalisierung innerhalb der Umgebung. Insbesondere kann eine aktuelle Position und Orientierung des Bodenbearbeitungsgerätes 1 ermittelt werden und beispielsweise eine Verfahrroute durch die Umgebung geplant werden, welche frei von Hindernissen ist. Die Kollisionssensoren 26 sind beispielsweise als Infrarotsensoren ausgebildet und dienen der Detektion von Hindernissen in einem Nahbereich und somit auch einer Vermeidung von Kollisionen. Des Weiteren weist das Bodenbearbeitungsgerät 1 Absturzsensoren 8, 9, 10, 11, 12, 13, 14, 15 auf, welche einen Abhang 16 auf einem Untergrund 6 detektieren können. Hierzu detektieren die Absturzsensoren 8, 9, 10, 11, 12, 13, 14, 15 einen Abstand a, welcher eine Höhenänderung des Untergrunds 6 angibt. Die Recheneinrichtung 5 wertet den detektierten Abstand a aus, indem die Recheneinrichtung 5 den Abstand a durch einen Vergleich mit einem definierten Grenzwert auswertet. Sofern der detektierte Abstand a größer ist als der definierte Grenzwert, wird darauf geschlossen, dass sich das Bodenbearbeitungsgerät 1 an einem Abhang 16 des Untergrundes 6 befindet. Um das Bodenbearbeitungsgerät 1 aus allen Richtungen und damit auch in alle beliebigen Fortbewegungsrichtungen vor einem Absturz über den Abhang 16 zu schützen, sind die Absturzsensoren 8, 9, 10, 11, 12, 13, 14, 15 entlang einer Umfangskontur 17 der Unterseite 7 des Gerätegehäuses 2 angeordnet.

Figur 2 zeigt die Unterseite 7 des Bodenbearbeitungsgerätes 1 mit den entlang der Umfangskontur 17 des Gerätegehäuses 2 angeordneten Absturzsensoren 8, 9, 10, 11, 12, 13, 14, 15. Die Absturzsensoren 8, 9, 10, 11, 12, 13, 14, 15 sind in zwei Reihen angeordnet, nämlich in einer äußeren Reihe, welche vier äußere Absturzsensoren 8, 9, 10, 11 aufweist, und einer inneren Reihe, welche vier innere Absturzsensoren 12, 13, 14, 15 beinhaltet. Jedem äußeren Absturzsensor 8, 9, 10, 11 ist dabei jeweils ein innerer Absturzsensor 12, 13, 14, 15 zugeordnet, so dass sich Sensorpaare bilden. Hier sind Sensorpaare gebildet aus dem äußeren Absturzsensor 8 und dem inneren Absturzsensor 12, dem äußeren Absturzsensor 9 und dem inneren Absturzsensor 13, dem äußeren Absturzsensor 10 und dem inneren Absturzsensor 14 sowie dem äußeren Absturzsensor 11 und dem inneren Absturzsensor 15. Jedes Paar von Absturzsensoren 8, 9, 10, 11, 12, 13, 14, 15 ist dabei im Wesentlichen einer Seite der Umfangskontur 17 zugeordnet, um das Bodenbearbeitungsgerät 1 in vier verschiedene Richtungen gegen in der Umgebung vorhandene Abhänge 16 abzusichern. Die Figur 2 stellt des Weiteren einen definierten Schwerpunktbereich 19 dar, welcher einen kreisförmigen Bereich um eine Projektion 20 des Massenschwerpunktes 21 in die an der Unterseite 7 ausgebildete Ebene der Absturzsensoren 8, 9, 10, 11, 12, 13, 14, 15 definiert. Bei einer Betrachtung des Bodenbearbeitungsgerätes 1 von unten oder oben (bei waagerechter Orientierung des Gerätegehäuses 2 und vertikaler Ansicht auf das Gerätegehäuse 2) liegen der Massenschwerpunkt 21 und dessen Projektion 20 aufeinander. Der um die Projektion 20 definierte Schwerpunktbereich 19 ist so bemessen, dass Verbindungsgeraden 18 zwischen entlang der Umfangskontur 17 aufeinander folgenden inneren Absturzsensoren 12, 13, 14, 15 den kreisförmigen Schwerpunktbereich 19 nicht berühren. Hier sind Verbindungsgeraden 18 definiert zwischen den aufeinanderfolgenden inneren Absturzsensoren 12 und 13, 13 und 14, 14 und 15 sowie 15 und 12. Erkennbar schneiden oder berühren diese Verbindungsgeraden 18 den Schwerpunktbereich 19 nicht. Der Schwerpunktbereich 19 ist so bemessen, dass für das Bodenbearbeitungsgerät 1 keine Absturzgefahr an einem Abhang 16 besteht, solange eine Randkante des Abhangs 16 noch nicht in diesen Schwerpunktbereich 19 eingreift, d. h. bei horizontaler Orientierung des Bodenbearbeitungsgerätes 1 noch nicht unterhalb des Schwerpunktbereiches 19 liegt. Sofern das Bodenbearbeitungsgerät 1 jedoch weiter in Richtung des Abhangs 16 verfährt und der Schwerpunktbereich 19 bereits teilweise über dem Abhang 16 liegt, besteht ein großes Risiko, dass das Bodenbearbeitungsgerät 1 über den Abhang 16 kippt. Die Anordnung der Absturzsensoren 8, 9, 10, 11, 12, 13, 14, 15 an der Unterseite 7 verhindert, dass sich das Bodenbearbeitungsgerät 1 überhaupt soweit in Richtung des Abhangs 16 fortbewegt und somit eine gefährliche Situation entsteht.

Die Nachbarschaft des Schwerpunktbereiches 19 an der Unterseite 7 des Gerätegehäuses 2 wird durch die Absturzsensoren 8, 9, 10, 11, 12, 13, 14, 15 überwacht, welche die Verbindungsgeraden 18 um den Schwerpunktbereich 19 aufspannen. Dabei dient die zweite Sensorreihe, welche die inneren Absturzsensoren, 12, 13, 14, 15 beinhaltet, als Ausfallsicherung für die äußeren Absturzsensoren 8, 9, 10, 11. Beispielsweise sichert der innere Absturzsensor 12 das Bodenbearbeitungsgerät 1 vor einem Absturz an einem Abhang 16 bei einer üblichen Vorwärtsbewegung des Bodenbearbeitungsgerätes 1, wenn der zugeordnete äußere Absturzsensor 8 ausfällt oder ein falsches Detektionsergebnis produziert. Ebenso kann der innere Absturzsensor 13 den äußeren Absturzsensor 9 ersetzen. Der innere Absturzsensor 14 bildet entsprechend eine Redundanz für den äußeren Absturzsensor 10, ebenso kann der innere Absturzsensor 15 den äußeren Absturzsensor 11 ersetzen.

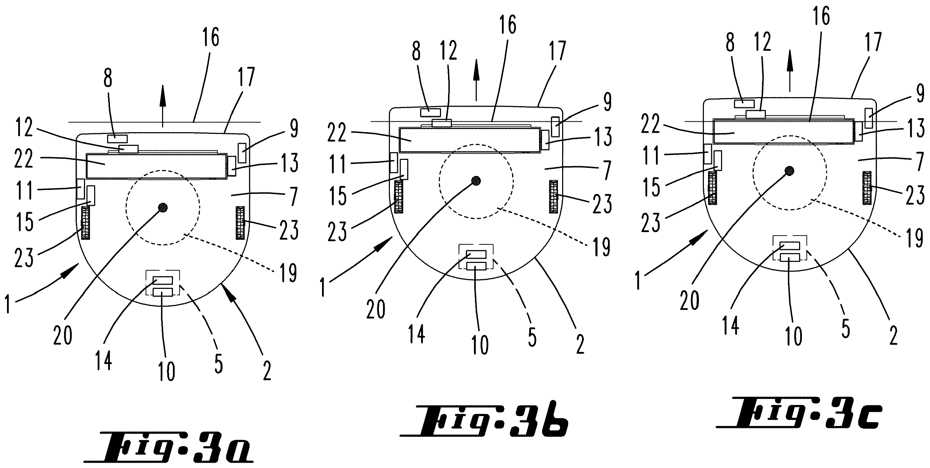

Im Folgenden wird das Verfahren zum Überprüfen der Funktionsfähigkeit der Absturzsensoren 8, 9, 10, 11, 12, 13, 14, 15 während des laufenden Betriebs des Bodenbearbeitungsgerätes 1 näher beschrieben. Im Verlauf der Figuren 3a bis 3c bewegt sich das Bodenbearbeitungsgerät 1 auf einen Abhang 16 zu. Gemäß der Figur 3a befindet sich das Gerätegehäuse 2 des Bodenbearbeitungsgerätes 1 noch vollständig vor dem Abhang 16. In Figur 3b ist das Gerätegehäuse 2 bereits teilweise über den Abhang 16 geschoben, nämlich so, dass ein Teilabschnitt der Umfangskontur 17 über den Abhang 16 hinausragt. In Figur 3c ist das Gerätegehäuse 2 noch weiter über den Abhang 16 hinausgeschoben.

In der Situation gemäß Figur 3a detektiert noch keiner der Absturzsensoren 8, 9, 10, 11, 12, 13, 14, 15 den Abhang 16. Das Bodenbearbeitungsgerät 1 bewegt sich daher zunächst weiter auf den Abhang 16 zu, nämlich in die durch einen Pfeil angedeutete Fortbewegungsrichtung. Sobald das Bodenbearbeitungsgerät 1 zumindest teilweise mit der Umfangskontur 17 über dem Abhang 16 steht, gerät die Randkante des Abhangs 16 in den Detektionsbereich des in Fortbewegungsrichtung vorauseilenden äußeren Absturzsensors 8 (Figur 3b). Sofern der Absturzsensor 8 fehlerfrei funktioniert, kann die Recheneinrichtung 5 die Anwesenheit des Abhangs 16 ermitteln und die Antriebseinrichtung 3 des Bodenbearbeitungsgerätes 1 so steuern, dass die Fortbewegungsrichtung geändert wird, nämlich von dem Abhang 16 weg. In dem hier gezeigten Beispiel wird jedoch davon ausgegangen, dass der in Fahrtrichtung der Umfangskontur 17 des Gerätegehäuses 2 am nächsten liegende äußere Absturzsensor 8 defekt ist und die Recheneinrichtung 5 somit nicht erkennen kann, dass sich das Gerätegehäuse 2 bereits teilweise über den Abhang 16 geschoben hat. Da sich der dem äußeren Absturzsensor 8 zugeordnete innere Absturzsensor 12 noch nicht über dem Abhang 16 befindet, kann dieser den Abhang 16 noch nicht erkennen. Die Bewegung des Bodenbearbeitungsgerätes 1 über den Abhang 16 wird somit fortgesetzt, bis die in Figur 3c gezeigte Stellung erreicht ist. Bei dieser Stellung befindet sich die Randkante des Abhangs 16 innerhalb des Detektionsbereiches des inneren Absturzsensors 12, welcher als Ersatz für den äußeren Absturzsensor 8 dient. Die Recheneinrichtung 5 erkennt, dass sich das Gerätegehäuse 2 bereits teilweise über dem Abhang 16 befindet und stoppt die Antriebseinrichtung 3 des Bodenbearbeitungsgerätes 1, noch weit bevor der Schwerpunktbereich 19 des Gerätegehäuses 2 über dem Abhang 16 liegt. Das Bodenbearbeitungsgerät 1 ist somit zuverlässig vor einem Absturz über den Abhang 16 gesichert. Neben dem Stoppen der Antriebseinrichtung 3 veranlasst die Recheneinrichtung 5 des Weiteren vorzugsweise auch die Ausgabe einer Information an einen Nutzer des Bodenbearbeitungsgerätes 1, so dass dieser darüber informiert wird, dass ein Fehlerfall aufgetreten ist und das Bodenbearbeitungsgerät 1 kontrolliert werden sollte.

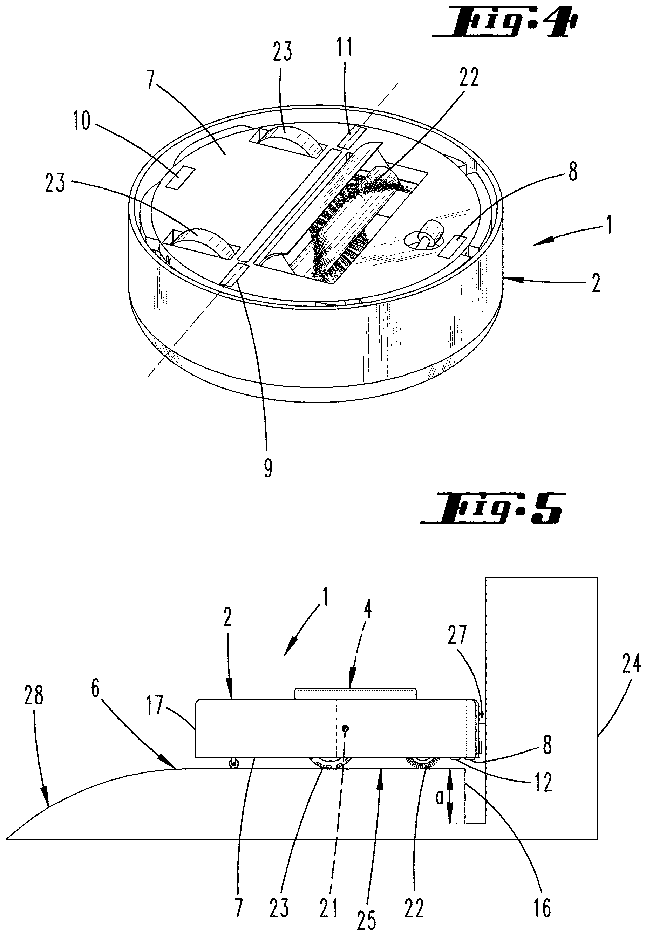

Die Figuren 4 und 5 zeigen weitere mögliche Ausführungsformen eines erfindungsgemäßen Bodenbearbeitungsgerätes 1. Hierbei weist das Bodenbearbeitungsgerät 1 auf der Unterseite 7 des Gerätegehäuses 2 keine Dopplung von Absturzsensoren 8, 9, 10, 11 auf. Vielmehr befindet sich entlang der Umfangskontur 17 nur eine einzige Reihe von Absturzsensoren 8, 9, 10, 11. Das Gerätegehäuse 2 des Bodenbearbeitungsgerätes 1 ist hier beispielhaft rund ausgebildet, wobei sich die Absturzsensoren 8, 9, 10, 11 in Winkelabschnitten von jeweils 90 Grad entlang der Umfangskontur 17 befinden. Bezogen auf eine übliche Fortbewegungsrichtung des Bodenbearbeitungsgerätes 1, in welcher der Absturzsensor 8 vorauseilt, ist im Wesentlichen jede Seite des Bodenbearbeitungsgerätes 1 durch einen der Absturzsensoren 8, 9, 10, 11 vor einem Absturz gesichert. Das Bodenbearbeitungsgerät 1 kann auch bei diesem Ausführungsbeispiel ein beliebiges Bodenbearbeitungsgerät 1 sein. Hier ist dieses wiederum mit einem Reinigungselement 22 ausgestattet und verfügt über Räder 23 zur selbsttätigen Fortbewegung des Bodenbearbeitungsgerätes 1 über einen Untergrund 6. Die Absturzsensoren 8, 9, 10, 11 sind - wie bei der erstgenannten Ausführungsform gemäß den Figuren 1 bis 3 - ausgebildet, einen Abstand a zu dem Untergrund 6 zu messen. Die Absturzsensoren 8, 9, 10, 11 können als optische oder akustische Sensoren ausgebildet sein, beispielsweise als Lasersensoren oder Ultraschallsensoren. Darüber hinaus kann auch eine Abstandsmessung mittels einer Radarsensorik erfolgen. Die Recheneinrichtung 5 des Bodenbearbeitungsgerätes ist ausgebildet, die Funktionsfähigkeit jedes der Absturzsensoren 8, 9, 10, 11 zu überprüfen, indem ein Signal des zu überprüfenden Absturzsensors 8, 9, 10, 11 mit den Signalen zumindest der beiden jeweils - je nach Fortbewegungsrichtung des Bodenbearbeitungsgerätes 1 -nachfolgenden Absturzsensoren 8, 9, 10, 11 verglichen wird. Wenn sich das Bodenbearbeitungsgerät 1 beispielsweise in Hauptfortbewegungsrichtung bewegt, bei welcher der Absturzsensor 8 vorauseilt, wird das Detektionssignal des Absturzsensors 8 mit den Signalen der beiden in Fortbewegungsrichtung nacheilenden Absturzsensoren 9 und 11 verglichen. Eine gedachte Verbindungsgerade zwischen den nacheilenden Absturzsensoren 9 und 11 ist dabei im Wesentlichen orthogonal zu der Fortbewegungsrichtung des Bodenbearbeitungsgerätes 1 orientiert, so dass davon auszugehen ist, dass die nacheilenden Absturzsensoren 9 und 11 einen Abhang 16 im Wesentlichen gleichzeitig detektieren werden, wenn dessen Randkante ebenfalls orthogonal zu der Fortbewegungsrichtung des Bodenbearbeitungsgerätes 1 verläuft. Wenn der vorauseilende Absturzsensor 8 in üblicher Art und Weise funktionsfähig ist, wird dieser den Abhang 16 zuerst detektieren. Die Recheneinrichtung 5 erkennt anhand des von dem Absturzsensor 8 gemessenen Abstands a, dass sich das Gerätegehäuse 2 bereits teilweise über dem Abhang 16 befindet und steuert die Antriebseinrichtung 3 der Räder 23 so an, dass das Bodenbearbeitungsgerät 1 vor Erreichen des Abhangs 16 wendet bzw. sich zur Seite weg bewegt. Wenn der Absturzsensor 8 jedoch defekt ist, kann es vorkommen, dass dieser ein falsches oder gar kein Detektionssignal ausgibt und sich das Bodenbearbeitungsgerät 1 somit weiterhin auf den Abhang 16 zubewegt. Bei der fortgesetzten Fortbewegung gelangen dann die beiden nacheilenden Absturzsensoren 9 und 11 über den Abhang 16. Die Recheneinrichtung 5 des Bodenbearbeitungsgerätes 1 erkennt, dass der Absturzsensor 8 den Abhang 16 zuvor nicht detektiert hat und schließt darauf, dass der Absturzsensor 8 defekt sein muss. Sodann wird bevorzugt als Notabschaltung die Antriebseinrichtung 3 des Bodenbearbeitungsgerätes 1 gestoppt. Zusätzlich wird bevorzugt ein Nutzer des Bodenbearbeitungsgerätes 1 auf den Fehler des Absturzsensors 8 aufmerksam gemacht. Obwohl die Funktionsweise hier anhand eines Bodenbearbeitungsgerätes 1 mit nur vier Absturzsensoren 8, 9, 10, 11 dargestellt ist, empfiehlt es sich, noch weitere Absturzsensoren 8, 9, 10, 11 an der Unterseite 7 des Gerätegehäuses 2 anzuordnen, insbesondere so, dass das erste Paar von nacheilenden Absturzsensoren 9, 11 vor einem tragenden Element des Gerätegehäuses 2 liegt, d. h. beispielsweise vor dem das Bodenbearbeitungsgerät 1 auf dem Untergrund 6 abstützenden Reinigungselement 22. Dadurch wird verhindert, dass das Bodenbearbeitungsgerät 1 über einen Abhang 16 kippen kann, bevor die nachfolgenden Absturzsensoren 9, 11 den Fehler des vorauseilenden Absturzsensors 8 ausgleichen können. Die Sicherungsfunktion des Bodenbearbeitungsgerätes 1 funktioniert grundsätzlich in jede beliebige Fortbewegungsrichtung des Bodenbearbeitungsgerätes 1, sofern die Antriebseinrichtung 3 eine solche Fortbewegung zulässt und entsprechend an der Unterseite 7 des Gerätegehäuses 2 Absturzsensoren 8, 9, 10, 11 angeordnet sind, die die zuvor beschriebene Funktionsweise in jede Fortbewegungsrichtung des Bodenbearbeitungsgerätes 1 erlauben. Sofern sich das Bodenbearbeitungsgerät 1 beispielsweise in eine Richtung fortbewegt, in welcher der Absturzsensor 10 vorauseilt, dienen ebenfalls wieder die Absturzsensoren 9 und 11 als Vergleichssensoren, welche ein Detektionsergebnis zum Vergleich mit dem Detektionsergebnis des vorauseilenden Absturzsensors 10 liefern.

Die Figur 5 zeigt schließlich eine mögliche Ausführungsform eines erfindungsgemäßen Systems aus einem sich selbsttätig fortbewegenden Bodenbearbeitungsgerät 1 und einer Basisstation 24. Die Basisstation 24 ist hier beispielsweise als Ladestation für einen Akkumulator (nicht dargestellt) des Bodenbearbeitungsgerätes 1ausgebildet. Sowohl das Bodenbearbeitungsgerät 1, als auch die Basisstation 24 weisen eine Ladeschnittstelle 27 auf, die eine Übertragung von elektrischer Energie ermöglicht. Die Erfindung ist jedoch nicht an eine Ausbildung der Basisstation 24 als Ladestation gebunden. Alternativ oder zusätzlich kann die Basisstation 24 auch eingerichtet sein, andere Servicetätigkeiten für das Bodenbearbeitungsgerät 1 bereitzustellen. Die Basisstation 24 verfügt über ein Gehäuse mit einem Untergrund 6 zum Befahren durch das Bodenbearbeitungsgerät 1. Damit das Bodenbearbeitungsgerät 1 auf den Untergrund 6 der Basisstation 24 gelangen kann, verfügt diese über eine Rampe 28. An dem Untergrund 6 ist eine Referenzfläche 25 ausgebildet, welche einen Abhang 16 mit einem definierten, der Recheneinrichtung 5 des Bodenbearbeitungsgerätes 1 bekannten Abstand a zu einer tiefer liegenden Ebene aufweist. Der Abhang 16 bildet eine Art "Messspalt" über welchen sich ein Teilbereich der Unterseite 7 des Gerätegehäuses 2 des Bodenbearbeitungsgerätes 1 schiebt, wenn die Ladeschnittstellen 27 von Basisstation 24 und Bodenbearbeitungsgerät 1 zur Energieübertragung miteinander verbunden werden. In dieser "Dockingposition" detektiert der hier beispielsweise vorauseilende Absturzsensor 8 den Abstand a und vergleicht diesen mit dem der Recheneinrichtung 5 bekannten Referenzwert des Abstands a. Sofern beide Beträge des Abstands a übereinstimmen, stellt die Recheneinrichtung 5 des Bodenbearbeitungsgerätes 1 fest, dass der Absturzsensor 8 korrekt funktioniert. Sollte der Absturzsensor 8 hingegen einen von dem Referenzwert abweichenden Abstand a detektieren, kann die Recheneinrichtung 5 auf einen Fehler des Absturzsensors 8 schließen. Sodann kann einem Nutzer über eine Kommunikationsschnittstelle des Bodenbearbeitungsgerätes 1 ein Hinweis gegeben werden, dass das Bodenbearbeitungsgerät 1 von einem Fachmann überprüft werden sollte. Der Hinweis kann auch mittels drahtloser Kommunikation an ein externes Endgerät des Nutzers übermittelt werden.

Es kann darüber hinaus auch vorgesehen sein, dass die Referenzfläche 25 der Basisstation 24 so ausgebildet ist, dass zeitgleich die ordnungsgemä-ße Funktion mehrerer Absturzsensoren 8, 9, 10, 11, 12, 13, 14, 15 überprüft werden kann. Dabei ist die Referenzfläche 25 beispielsweise so geschnitten, dass mehrere Absturzsensoren 8, 9, 10, 11, 12, 13, 14, 15 aufweisende Teilbereiche des Gerätegehäuses 2 gleichzeitig über einen Abhang 16 hinausragen und einen Abstand a detektieren können, der dann wiederum von der Recheneinrichtung 5 des Bodenbearbeitungsgerätes 1 mit einem oder mehreren Referenzwerten verglichen wird. Beispielsweise kann die in Figur 5 dargestellte Referenzfläche 25 so schmal sein, dass die zueinander parallelen Räder 23 noch sicher darauf stehen, während daneben liegende Teilbereiche des Gerätegehäuses 2 über jeweils einen Abhang 16 ragen.

Eine weitere Möglichkeit zur Überprüfung der ordnungsgemäßen Funktion der Absturzsensoren 8, 9, 10, 11, 12, 13, 14, 15 ist, die zeitlich aufeinanderfolgend von dem Absturzsensor 8, 9, 10, 11, 12, 13, 14, 15 detektierten Beträge des Abstands a während einer Fortbewegung des Bodenbearbeitungsgerätes 1 miteinander zu vergleichen. Selbst bei einem ebenen Untergrund 6 kommt es während der Fortbewegung des Bodenbearbeitungsgerätes 1 zu einer Schwankung des Detektionssignals durch Signalrauschen. Wenn der zu überprüfende Absturzsensor 8, 9, 10, 11, 12, 13, 14, 15 defekt ist, kann eine solche Schwankung des Detektionswertes nicht beobachtet werden. Diese zusätzliche Überprüfungsmaßnahme kann bei allen zuvor beschriebenen Ausführungsformen des Bodenbearbeitungsgerätes 1 angewendet werden, d. h. sowohl bei der Ausführungsform gemäß den Figuren 1 bis 3, bei der Ausführungsform gemäß Figur 4 und auch bei der Ausführungsform gemäß Figur 5. Darüber hinaus können die Ausführungsformen auch untereinander kombiniert werden, um die Funktionsfähigkeit der Absturzsensoren 8, 9, 10, 11, 12, 13, 14, 15 mehrfach zu überprüfen und auf verschiedene Art und Weise zu verifizieren.

**Liste der Bezugszeichen**

| | | | |
|---|---|---|---|
| 1 | Bodenbearbeitungsgerät | 24 | Basisstation |
| 2 | Gerätegehäuse | 25 | Referenzfläche |
| 3 | Antriebseinrichtung | 26 | Kollisionssensor |
| 4 | Detektionseinrichtung | 27 | Ladeschnittstelle |
| 5 | Recheneinrichtung | 28 | Rampe |
| 6 | Untergrund | | |
| 7 | Unterseite | | |
| 8 | Absturzsensor | a | Abstand |
| 9 | Absturzsensor | | |
| 10 | Absturzsensor | | |
| 11 | Absturzsensor | | |
| 12 | Absturzsensor | | |
| 13 | Absturzsensor | | |
| 14 | Absturzsensor | | |
| 15 | Absturzsensor | | |
| 16 | Abhang | | |
| 17 | Umfangskontur | | |
| 18 | Verbindungsgerade | | |
| 19 | Schwerpunktbereich | | |
| 20 | Projektion | | |
| 21 | Massenschwerpunkt | | |
| 22 | Reinigungselement | | |
| 23 | Rad | | |

## Patentansprüche

1. Sich selbsttätig fortbewegendes Bodenbearbeitungsgerät (1) mit einem Gerätegehäuse (2), einer Antriebseinrichtung (3) zur Fortbewegung des Bodenbearbeitungsgerätes (1) innerhalb einer Umgebung, mindestens einem an einer einem Untergrund (6) zugewandten Unterseite (7) des Gerätegehäuses (2) angeordneten Absturzsensor (8, 9, 10, 11, 12, 13, 14, 15), welcher eingerichtet ist, einen Abstand (a) des Bodenbearbeitungsgerätes (1) zu dem Untergrund (6) zu detektieren, und einer Recheneinrichtung (5), welche eingerichtet ist, den von dem Absturzsensor (8, 9, 10, 11, 12, 13, 14, 15) detektierten Abstand (a) mit einem einen Abhang (16) definierenden Grenzwert zu vergleichen und in dem Falle, dass der detektierte Abstand (a) größer ist als der definierte Grenzwert, die Anwesenheit eines Abhangs (16) als Detektionsergebnis festzustellen und einen Steuerbefehl zur Änderung einer Fortbewegung des Bodenbearbeitungsgerätes (1) an die Antriebseinrichtung (3) zu übermitteln, **dadurch gekennzeichnet, dass** das Bodenbearbeitungsgerät (1) an der Unterseite (7) des Gerätegehäuses (2) eine Mehrzahl von in Richtung einer Umfangskontur (17) der Unterseite (7) hintereinander angeordneten Absturzsensoren (8, 9, 10, 11, 12, 13, 14, 15) aufweist, wobei die Recheneinrichtung (5) eingerichtet ist, ein Detektionsergebnis eines Absturzsensors (8, 9, 10, 11, 12, 13, 14, 15) mit einem vorbekannten Referenzergebnis zu vergleichen und in dem Fall, dass das Detektionsergebnis nicht mit dem Referenzergebnis übereinstimmt eine Fehlfunktion des Absturzsensors (8, 9, 10, 11, 12, 13, 14, 15) festzustellen, wobei die Recheneinrichtung (5) eingerichtet ist, während einer Fortbewegung des Bodenbearbeitungsgerätes (1) zeitlich aufeinanderfolgend von demselben Absturzsensor (8, 9, 10, 11, 12, 13, 14, 15) detektierte Abstände (a) miteinander zu vergleichen und in dem Fall, dass die Abstände (a) identisch sind, eine Fehlfunktion des Absturzsensors (8, 9, 10, 11, 12, 13, 14, 15) festzustellen, und/oder wobei die Recheneinrichtung (5) eingerichtet ist, ein Detektionsergebnis eines Absturzsensors (8, 9, 10, 11, 12, 13, 14, 15) mit einem Detektionsergebnis mindestens eines dem Absturzsensor (8, 9, 10, 11, 12, 13, 14, 15) in Fortbewegungsrichtung nacheilenden weiteren Absturzsensors (8, 9, 10, 11, 12, 13, 14, 15) zu vergleichen und in dem Fall, dass der nacheilende Absturzsensor (8, 9, 10, 11, 12, 13, 14, 15) einen Abhang (16) detektiert, ohne dass zuvor der vorauseilende Absturzsensor (8, 9, 10, 11, 12, 13, 14, 15) den Abhang (16) detektiert hat, eine Fehlfunktion des vorauseilenden Absturzsensors (8, 9, 10, 11, 12, 13, 14, 15) festzustellen, wobei das Bodenbearbeitungsgerät (1) zunächst weiterbetrieben wird, unter der Maßgabe, dass der nacheilende Absturzsensor (8, 9, 10, 11, 12, 13, 14, 15) nun die Sicherungsfunktion des defekten vorauseilenden Absturzsensors (8, 9, 10, 11, 12, 13, 14, 15) übernimmt.

2. Bodenbearbeitungsgerät (1) nach Anspruch 1, **dadurch gekennzeichnet, dass** die Unterseite (7) des Gerätegehäuses mindestens vier Absturzsensoren (8, 9, 10, 11, 12, 13, 14, 15) aufweist, welche sich bezogen auf eine geometrische Mitte der Unterseite (7) im Wesentlichen paarweise gegenüberliegen, so dass einer jeden von vier Seiten der Umfangskontur (17) zumindest ein Absturzsensor (8, 9, 10, 11, 12, 13, 14, 15) zugeordnet ist.

3. Bodenbearbeitungsgerät (1) nach Anspruch 1 oder 2, **dadurch gekennzeichnet, dass** das Bodenbearbeitungsgerät (1) an der Unterseite (7) des Gerätegehäuses (2) eine Mehrzahl von in Richtung einer Umfangskontur (17) der Unterseite (7) hintereinander angeordneten äußeren Absturzsensoren (8, 9, 10, 11) und eine Mehrzahl von bezogen auf die Umfangskontur (17) und relativ zu den äußeren Absturzsensoren (8, 9, 10, 11) nach innen versetzten inneren Absturzsensoren (12, 13, 14, 15) aufweist, wobei die Recheneinrichtung (5) eingerichtet ist, ein Detektionsergebnis eines äußeren Absturzsensors (8, 9, 10, 11) mit einem Detektionsergebnis eines dem äußeren Absturzsensor (8, 9, 10, 11) örtlich zugeordneten inneren Absturzsensors (12, 13, 14, 15) zu vergleichen und in dem Fall, dass der innere Absturzsensor (12, 13, 14, 15) einen Abhang (16) detektiert und der zugeordnete äußere Absturzsensor (8, 9, 10, 11) keinen Abhang (16) detektiert, eine Fehlfunktion des äußeren Absturzsensors (8, 9, 10, 11) festzustellen.

4. Bodenbearbeitungsgerät (1) nach Anspruch 3, **dadurch gekennzeichnet, dass** jeweils ein innerer Absturzsensor (12, 13, 14, 15) einen äußeren Absturzsensor (8, 9, 10, 11) bezogen auf eine Position an der Unterseite (7) des Gerätegehäuses (2) räumlich zugeordnet ist, so dass der innere Absturzsensor (12, 13, 14, 15) und der äußere Absturzsensor (8, 9, 10, 11) ein Sensorpaar bilden.

5. Bodenbearbeitungsgerät (1) nach Anspruch 3 oder 4, **dadurch gekennzeichnet, dass** die inneren Absturzsensoren (12, 13, 14, 15) so an der Unterseite (7) des Gerätegehäuses (2) angeordnet sind, dass eine Verbindungsgerade (18) zwischen zwei in Umfangsrichtung der Umfangskontur (17) benachbarten inneren Absturzsensoren (12, 13, 14, 15) einen an der Unterseite (7) definierten Schwerpunktbereich (19), welcher eine vertikale Projektion (20) des Massenschwerpunktes (21) des Bodenbearbeitungsgerätes (1) in die Ebene der Absturzsensoren (8, 9, 10, 11, 12, 13, 14, 15) aufweist, nicht schneidet, insbesondere auch nicht tangiert.

6. Bodenbearbeitungsgerät (1) nach einem der vorhergehenden Ansprüche, **dadurch gekennzeichnet, dass** die Recheneinrichtung (5) eingerichtet ist, bei Feststellen einer Fehlfunktion des Absturzsensors (8, 9, 10, 11, 12, 13, 14, 15) die Fortbewegung des Bodenbearbeitungsgerätes (1) zu stoppen und/oder ein Fehlersignal an einen Nutzer des Bodenbearbeitungsgerätes (1) zu übermitteln.

7. System aus einem sich selbsttätig fortbewegenden Bodenbearbeitungsgerät (1) nach einem der vorhergehenden Ansprüche und einer Basisstation (24) zum Ausführen einer Servicetätigkeit an dem Bodenbearbeitungsgerät (1), **dadurch gekennzeichnet, dass** die Basisstation (24) eine von dem Bodenbearbeitungsgerät (1) befahrbare Referenzfläche (25) aufweist, wobei die Recheneinrichtung (5) des Bodenbearbeitungsgerätes (1) eingerichtet ist, einen von einem Absturzsensor (8, 9, 10, 11, 12, 13, 14, 15) des Bodenbearbeitungsgerätes (1) detektierten Abstand (a) zu der Referenzfläche (25) mit einem definierten Referenzergebnis zu vergleichen und in dem Fall einer Abweichung eine Fehlfunktion des Absturzsensors (8, 9, 10, 11, 12, 13, 14, 15) festzustellen.

8. System nach Anspruch 7, **dadurch gekennzeichnet, dass** die Referenzfläche (25) einen Abhang (16) aufweist, wobei der Abhang (16) so positioniert ist, dass sich der Absturzsensor (8, 9, 10, 11, 12, 13, 14, 15) des Bodenbearbeitungsgerätes (1) bei einem Auffahren auf die Referenzfläche (25) über den Abhang (16) hinaus verlagert.

9. Verfahren zum Überprüfen der Funktionsfähigkeit eines Absturzsensors (8, 9, 10, 11, 12, 13, 14, 15) eines sich selbsttätig fortbewegenden Bodenbearbeitungsgerätes (1), wobei das Bodenbearbeitungsgerät (1) ein Gerätegehäuse (2), eine Antriebseinrichtung (3) zur Fortbewegung des Bodenbearbeitungsgerätes (1) innerhalb einer Umgebung, mindestens einen an einer einem Untergrund (6) zugewandten Unterseite (7) des Gerätegehäuses (2) angeordneten Absturzsensor (8, 9, 10, 11, 12, 13, 14, 15) und eine Recheneinrichtung (5) aufweist, wobei der Absturzsensor (8, 9, 10, 11, 12, 13, 14, 15) einen Abstand (a) des Bodenbearbeitungsgerätes (1) zu dem Untergrund (6) detektiert, und wobei die Recheneinrichtung (5) den von dem Absturzsensor (8, 9, 10, 11, 12, 13, 14, 15) detektierten Abstand (a) mit einem einen Abhang (16) definierenden Grenzwert vergleicht und in dem Falle, dass der Abstand (a) größer ist als der definierte Grenzwert, die Anwesenheit eines Abhangs (16) als Detektionsergebnis feststellt und einen Steuerbefehl zur Änderung einer Fortbewegung des Bodenbearbeitungsgerätes (1) an die Antriebseinrichtung (3) übermittelt, **dadurch gekennzeichnet, dass** das Bodenbearbeitungsgerät (1) an der Unterseite (7) des Gerätegehäuses (2) eine Mehrzahl von in Richtung einer Umfangskontur (17) der Unterseite (7) hintereinander angeordneten Absturzsensoren (8, 9, 10, 11, 12, 13, 14, 15) aufweist, wobei die Recheneinrichtung (5) ein Detektionsergebnis eines Absturzsensors (8, 9, 10, 11, 12, 13, 14, 15) mit einem definierten Referenzergebnis vergleicht und in dem Fall, dass das Detektionsergebnis nicht mit dem Referenzergebnis übereinstimmt eine Fehlfunktion des Absturzsensors (8, 9, 10, 11, 12, 13, 14, 15) feststellt, wobei die Recheneinrichtung (5) während einer Fortbewegung des Bodenbearbeitungsgerätes (1) zeitlich aufeinanderfolgend von demselben Absturzsensor (8, 9, 10, 11, 12, 13, 14, 15) detektierte Abstände (a) miteinander vergleicht und in dem Fall, dass die Abstände (a) identisch sind, eine Fehlfunktion des Absturzsensors (8, 9, 10, 11, 12, 13, 14, 15) feststellt, und/oder wobei die Recheneinrichtung (5) ein Detektionsergebnis eines Absturzsensors (8, 9, 10, 11, 12, 13, 14, 15) mit einem Detektionsergebnis mindestens eines dem Absturzsensor (8, 9, 10, 11, 12, 13, 14, 15) in Fortbewegungsrichtung nacheilenden weiteren Absturzsensors (8, 9, 10, 11, 12, 13, 14, 15) vergleicht und in dem Fall, dass der nacheilende Absturzsensor (8, 9, 10, 11, 12, 13, 14, 15) einen Abhang (16) detektiert, ohne dass zuvor der vorauseilende Absturzsensor (8, 9, 10, 11, 12, 13, 14, 15) den Abhang (16) detektiert hat, eine Fehlfunktion des vorauseilenden Absturzsensors (8, 9, 10, 11, 12, 13, 14, 15) feststellt, wobei das Bodenbearbeitungsgerät (1) zunächst weiterbetrieben wird, unter der Maßgabe, dass der nacheilende Absturzsensor (8, 9, 10, 11, 12, 13, 14, 15) nun die Sicherungsfunktion des defekten vorauseilenden Absturzsensors (8, 9, 10, 11, 12, 13, 14, 15) übernimmt.

## Claims

1. An automatically moving floor treatment appliance (1) comprising an appliance housing (2), a drive means (3) for the movement of the floor treatment appliance (1) within a surrounding area, at least one fall sensor (8, 9, 10, 11, 12, 13, 14, 15) arranged on an underside (7) of the appliance housing (2) facing a surface (6), which is configured to detect a distance (a) of the floor treatment appliance (1) from the surface (6), and a computing means (5), which is configured to compare the distance (a) detected by means of the fall sensor (8, 9, 10, 11, 12, 13, 14, 15) with a threshold value defining a slope (16) and, in the event that the detected distance (a) is greater than the defined threshold value, to determine the presence of a slope (16) as detection result, and to transmit a control command for changing a movement of the floor treatment appliance (1) to the drive means (3), **characterized in that**, on the underside (7) of the appliance housing (2), the floor treatment appliance (1) has a plurality of fall sensors (8, 9, 10, 11, 12, 13, 14, 15), which are arranged one behind the other in the direction of a circumferential contour (17) of the underside (7), wherein the computing means (5) is configured to compare a detection result of a fall sensor (8, 9, 10, 11, 12, 13, 14, 15) with a known reference result, and, in the event that the detection result does not correspond with the reference result, to determine a malfunctioning of the fall sensor (8, 9, 10, 11, 12, 13, 14, 15), wherein the computing means (5) is configured to compare distances (a) detected chronologically successively by the same fall sensor (8, 9, 10, 11, 12, 13, 14, 15) during a movement of the floor treatment appliance (1) with one another, and, in the event that the distances (a) are identical, to determine a malfunctioning of the fall sensor (8, 9, 10, 11, 12, 13, 14, 15), and/or wherein the computing means (5) is configured to compare a detection result of a fall sensor (8, 9, 10, 11, 12, 13, 14, 15) with a detection result of at least one further fall sensor (8, 9, 10, 11, 12, 13, 14, 15) trailing the fall sensor (8, 9, 10, 11, 12, 13, 14, 15) in the direction of movement, and, in the event that the trailing fall sensor (8, 9, 10, 11, 12, 13, 14, 15) detects a slope (16) without the leading fall sensor (8, 9, 10, 11, 12, 13, 14, 15) having detected the slope (16) before, to determine a malfunctioning of the fall sensor (8, 9, 10, 11, 12, 13, 14, 15), wherein the floor treatment appliance (1) is initially further operated, under the condition that the trailing fall sensor (8, 9, 10, 11, 12, 13, 14, 15) now takes over the securing function of the defective leading fall sensor (8, 9, 10, 11, 12, 13, 14, 15).

2. The floor treatment appliance (1) according to claim 1, **characterized in that** the underside (7) of the appliance housing has at least four fall sensors (8, 9, 10, 11, 12, 13, 14, 15), which, based on a geometrical center of the underside (7), are located opposite one another essentially in pairs, so that at least one fall sensor (8, 9, 10, 11, 12, 13, 14, 15) is assigned to each one of four sides of the circumferential contour (17).

3. The floor treatment appliance (1) according to claim 1 or 2, **characterized in that**, on the underside (7) of the appliance housing (2), the floor treatment appliance (1) has a plurality of outer fall sensors (8, 9, 10, 11), which are arranged one behind the other in the direction of a circumferential contour (17) of the underside (7), and a plurality of inner fall sensors (12, 13, 14, 15), which, based on the circumferential contour (17) and relative to the outer fall sensors (8, 9, 10, 11), are offset inwards, wherein the computing means (5) is configured to compare a detection result of an outer fall sensor (8, 9, 10, 11) with a detection result of an inner fall sensor (12, 13, 14, 15), which is locally assigned to the outer fall sensor (8, 9, 10, 11), and, in the event that the inner fall sensor (12, 13, 14, 15) detects a slope (16) and the assigned outer fall sensor (8, 9, 10, 11) does not detect a slope (16), to determine a malfunctioning of the outer fall sensor (8, 9, 10, 11).

4. The floor treatment appliance (1) according to claim 3, **characterized in that**, based on a position on the underside (7) of the appliance housing (2), an inner fall sensor (12, 13, 14, 15) is in each case spatially assigned to an outer fall sensor (8, 9, 10, 11), so that the inner fall sensor (12, 13, 14, 15) and the outer fall sensor (8, 9, 10, 11) form a sensor pair.

5. The floor treatment appliance (1) according to claim 3 or 4, **characterized in that** the inner fall sensors (12, 13, 14, 15) are arranged on the underside (7) of the appliance housing (2) so that a straight connecting line (18) between two inner fall sensors (12, 13, 14, 15), which are adjacent in the circumferential direction of the circumferential contour (17), does not intersect, in particular also does not affect, a center of gravity region (19) defined on the underside (7), which has a vertical projection (20) of the center of mass (21) of the floor treatment appliance (1) into the plane of the fall sensors (8, 9, 10, 11, 12, 13, 14, 15) .

6. The floor treatment appliance (1) according to one of the preceding claims, **characterized in that** the computing means (5) is configured to stop the movement of the floor treatment appliance (1) and/or to transmit an error signal to a user of the floor treatment appliance (1) when a malfunctioning of the fall sensor (8, 9, 10, 11, 12, 13, 14, 15) is determined.

7. A system of an automatically moving floor treatment appliance (1) according to one of the preceding claims, and a base station (24) for performing a service activity at the floor treatment appliance (1), **characterized in that** the base station (24) has a reference surface (25), on which the floor treatment appliance (1) can travel, wherein the computing means (5) of the floor treatment appliance (1) is configured to compare a distance (a) from the reference surface (25) detected by a fall sensor (8, 9, 10, 11, 12, 13, 14, 15) of the floor treatment appliance (1) with a defined reference result, and, in the event of a deviation, to determine a malfunctioning of the fall sensor (8, 9, 10, 11, 12, 13, 14, 15).

8. The system according to claim 7, **characterized in that** the reference surface (25) has a slope (16), wherein the slope (16) is positioned so that the fall sensor (8, 9, 10, 11, 12, 13, 14, 15) of the floor treatment appliance (1) displaces beyond the slope (16) when traveling onto the reference surface (25).

9. A method for checking the functionality of a fall sensor (8, 9, 10, 11, 12, 13, 14, 15) of an automatically moving floor treatment appliance (1), wherein the floor treatment appliance (1) has an appliance housing (2), a drive means (3) for the movement of the floor treatment appliance (1) within a surrounding area, at least one fall sensor (8, 9, 10, 11, 12, 13, 14, 15) arranged on an underside (7) of the appliance housing (2) facing a surface (6), and a computing means (5), wherein the fall sensor (8, 9, 10, 11, 12, 13, 14, 15) detects a distance (a) of the floor treatment appliance (1) from the surface (6), and wherein the computing means (5) compares the distance (a) detected by the fall sensor (8, 9, 10, 11, 12, 13, 14, 15) with a threshold value defining a slope (16) and, in the event that the distance (a) is greater than the defined threshold value, determines the presence of a slope (16) as detection result, and transmits a control command for changing a movement of the floor treatment appliance (1) to the drive means (3), **characterized in that**, on the underside (7) of the appliance housing (2), the floor treatment appliance (1) has a plurality of fall sensors (8, 9, 10, 11, 12, 13, 14, 15), which are arranged one behind the other in the direction of a circumferential contour (17) of the underside (7), wherein the computing means (5) compares a detection result of a fall sensor (8, 9, 10, 11, 12, 13, 14, 15) with a defined reference result, and, in the event that the detection result does not correspond with the reference result, determines a malfunctioning of the fall sensor (8, 9, 10, 11, 12, 13, 14, 15), wherein the computing means (5) compares distances (a) detected chronologically successively by the same fall sensor (8, 9, 10, 11, 12, 13, 14, 15) during a movement of the floor treatment appliance (1) with one another, and, in the event that the distances (a) are identical, determines a malfunctioning of the fall sensor (8, 9, 10, 11, 12, 13, 14, 15), and/or wherein the computing means (5) compares a detection result of a fall sensor (8, 9, 10, 11, 12, 13, 14, 15) with a detection result of at least one further fall sensor (8, 9, 10, 11, 12, 13, 14, 15) trailing the fall sensor (8, 9, 10, 11, 12, 13, 14, 15) in the direction of movement, and, in the event that the trailing fall sensor (8, 9, 10, 11, 12, 13, 14, 15) detects a slope (16) without the fall sensor (8, 9, 10, 11, 12, 13, 14, 15) having detected the slope (16) before, determines a malfunctioning of the leading fall sensor (8, 9, 10, 11, 12, 13, 14, 15), wherein the floor treatment appliance (1) is initially further operated, under the condition that the trailing fall sensor (8, 9, 10, 11, 12, 13, 14, 15) now takes over the securing function of the defective leading fall sensor (8, 9, 10, 11, 12, 13, 14, 15).

## Revendications

1. Appareil de travail du sol (1) se déplaçant automatiquement avec un boîtier d'appareil (2), un dispositif d'entraînement (3) pour le déplacement de l'appareil de travail du sol (1) à l'intérieur d'un environnement, au moins un capteur de chute (8, 9, 10, 11, 12, 13, 14, 15) disposé sur une face inférieure (7) du boîtier d'appareil (2) tournée vers un sol (6) qui est conçu pour détecter une distance (a) entre l'appareil de travail du sol (1) et le sol (6), et un dispositif de calcul (5), qui est conçu pour comparer la distance (a) détectée par le capteur de chute (8, 9, 10, 11, 12, 13, 14, 15) avec une valeur limite définissant une pente (16) et, dans le cas que la distance détectée (a) est supérieure à la valeur limite définie, de constater la présence d'une pente (16) comme résultat de la détection et de transmettre un ordre de commande au dispositif d'entraînement (3) pour modifier un déplacement de l'appareil de travail du sol (1), **caractérisé en ce que** l'appareil de travail du sol (1) présente, sur la face inférieure (7) du boîtier (2) de l'appareil, une pluralité de capteurs de chute (8, 9, 10, 11, 12, 13, 14, 15) disposés les uns derrière les autres en direction d'un contour périphérique (17) de la face inférieure (7), le dispositif de calcul (5) étant conçu pour, comparer un résultat de détection d'un capteur de chute (8, 9, 10, 11, 12, 13, 14, 15) avec un résultat de référence connu au préalable et, dans le cas où le résultat de détection ne concorde pas avec le résultat de référence, constater un dysfonctionnement du capteur de chute (8, 9, 10, 11, 12, 13, 14, 15), le dispositif de calcul (5) étant conçu pour, comparer entre elles les distances (a) détectées par le même capteur de chute (8, 9, 10, 11, 12, 13, 14, 15) pendant un déplacement de l'appareil de travail du sol (1) et, dans le cas où les distances (a) sont identiques, de constater un dysfonctionnement du capteur de chute (8, 9, 10, 11, 12, 13, 14, 15), et/ou le dispositif de calcul (5) étant conçu pour comparer un résultat de détection d'un capteur de chute (8, 9, 10, 11, 12, 13, 14, 15) avec un résultat de détection d'au moins un autre capteur de chute (8, 9, 10, 11, 12, 13, 14, 15) qui suit le capteur de chute (8, 9, 10, 11, 12, 13, 14, 15) dans le sens de la progression, et, dans le cas où le capteur de chute en aval (8, 9, 10, 11, 12, 13, 14, 15) détecte une pente (16) sans que le capteur de chute en amont (8, 9, 10, 11, 12, 13, 14, 15) ait détecté auparavant la pente (16), de constater un dysfonctionnement du capteur de chute en amont (8, 9, 10, 11, 12, 13, 14, 15), le capteur de chute en amont (8, 9, 10, 11, 12, 13, 14, 15) pouvant être utilisé pour comparer les résultats de la comparaison appareil de travail du sol (1) continue d'abord à fonctionner, à condition que le capteur de chute en aval (8, 9, 10, 11, 12, 13, 14, 15) prenne maintenant en charge la fonction de sécurité du capteur de chute en amont défectueux (8, 9, 10, 11, 12, 13, 14, 15).

2. Appareil de travail du sol (1) selon la revendication 1, **caractérisé en ce que** la face inférieure (7) de boîtier d'appareil comporte au moins quatre capteurs de chute (8, 9, 10, 11, 12, 13, 14, 15) qui se font face sensiblement par paires par rapport à un centre géométrique de la face inférieure (7), de sorte qu'à chacun des quatre côtés du contour périphérique (17) est associé au moins un capteur de chute (8, 9, 10, 11, 12, 13, 14, 15).

3. Appareil de travail du sol (1) selon la revendication 1 ou 2, **caractérisé en ce que** l'appareil de travail du sol (1) comporte, sur la face inférieure (7) du boîtier (2) de l'appareil, une pluralité de capteurs de chute extérieurs (8, 9, 10, 11) disposés les uns derrière les autres dans la direction d'un contour périphérique (17) et une pluralité de capteurs de chute intérieurs (12, 13, 14, 15) décalés vers l'intérieur par rapport au contour périphérique (17) et par rapport aux capteurs de chute extérieurs (8, 9, 10, 11), le dispositif de calcul (5) étant conçu pour comparer un résultat de détection d'un capteur de chute extérieur (8, 9, 10, 11) avec un résultat de détection d'un capteur de chute intérieur (12, 13, 14, 15) associé localement au capteur de chute extérieur (8, 9, 10, 11), et, dans le cas où le capteur de chute intérieur (12, 13, 14, 15) détecte une pente (16) et où le capteur de chute extérieur associé (8, 9, 10, 11) ne détecte pas de pente (16), de constater un dysfonctionnement du capteur de chute extérieur (8, 9, 10, 11).

4. Appareil de travail du sol (1) selon la revendication 3, **caractérisé en ce qu'**un capteur de chute intérieur (12, 13, 14, 15) est respectivement associé dans l'espace à un capteur de chute extérieur (8, 9, 10, 11) par rapport à une position sur la face inférieure (7) du boîtier d'appareil (2), de sorte que le capteur de chute intérieur (12, 13, 14, 15) et le capteur de chute extérieur (8, 9, 10, 11) forment une paire de capteurs.

5. Appareil de travail du sol (1) selon la revendication 3 ou 4, **caractérisé en ce que** les capteurs de chute intérieurs (12, 13, 14, 15) sont disposés sur la face inférieure (7) du boîtier d'appareil (2) de telle sorte qu'une droite de liaison (18) entre deux capteurs de chute intérieurs (12, 13, 14, 15) voisins dans le sens de la circonférence du contour périphérique (17) ne coupe pas, et en particulier n'est pas non plus tangente, à une zone de centre de gravité (19) définie sur la face inférieure (7), qui présente une projection verticale (20) du centre de gravité (21) de l'appareil de traitement du sol (1) dans le plan des capteurs de chute (8, 9, 10, 11, 12, 13, 14, 15).

6. Appareil de travail du sol (1) selon l'une des revendications précédentes, **caractérisé en ce que** le dispositif de calcul (5) est conçu pour arrêter le déplacement de l'appareil de travail du sol (1) et/ou pour transmettre un signal d'erreur à un utilisateur de l'appareil de travail du sol (1) lorsqu'un dysfonctionnement du capteur de chute (8, 9, 10, 11, 12, 13, 14, 15) est constaté.

7. Système composé d'un appareil de travail du sol (1) se déplaçant automatiquement selon l'une des revendications précédentes et d'une station de base (24) pour effectuer une activité de service sur l'appareil de travail du sol (1), **caractérisé en ce que** la station de base (24) présente une surface de référence (25) pouvant être parcourue par l'appareil de travail du sol (1), le dispositif de calcul (5) de l'appareil de travail du sol (1) étant conçu pour comparer une distance (a) par rapport à la surface de référence (25), détectée par un capteur de chute (8, 9, 10, 11, 12, 13, 14, 15) de l'appareil de travail du sol (1), avec un résultat de référence défini et, en cas d'écart, pour constater un dysfonctionnement du capteur de chute (8, 9, 10, 11, 12, 13, 14, 15).

8. Système selon la revendication 7, **caractérisé en ce que** la surface de référence (25) présente une pente (16), la pente (16) étant positionnée de telle sorte que le capteur de chute (8, 9, 10, 11, 12, 13, 14, 15) de l'appareil de travail du sol (1) se déplace au-delà de la pente (16) lors de l'arrivée sur la surface de référence (25).

9. Procédé de contrôle du fonctionnement d'un capteur de chute (8, 9, 10, 11, 12, 13, 14, 15) d'un appareil de travail du sol (1) se déplaçant automatiquement, l'appareil de travail du sol (1) comprenant un boîtier d'appareil (2), un dispositif d'entraînement (3) pour le déplacement de l'appareil de travail du sol (1) à l'intérieur d'un environnement, au moins un capteur de chute (8, 9, 10, 11, 12, 13, 14, 15) disposé sur une face inférieure (7) du boîtier d'appareil (2) tournée vers un sol (6), et un dispositif de calcul (5), le capteur de chute (8, 9, 10, 11, 12, 13, 14, 15) détectant une distance (a) entre l'appareil de travail du sol (1) et le sol (6), et dans lequel le dispositif de calcul (5) compare la distance (a) détectée par le capteur de chute (8, 9, 10, 11, 12, 13, 14, 15) à une valeur limite définissant une pente (16) et, dans le cas où la distance (a) est supérieure à la valeur limite définie la présence d'une pente (16) comme résultat de détection et transmet un ordre de commande pour modifier un déplacement de l'appareil de travail du sol (1) au dispositif d'entraînement (3), **caractérisé en ce que** l'appareil de travail du sol (1) présente, sur la face inférieure (7) du boîtier d'appareil (2), une pluralité de capteurs de chute (8, 9, 10, 11, 12, 13, 14, 15) disposés les uns derrière les autres dans la direction d'un contour périphérique (17) de la face inférieure (7), le dispositif de calcul (5) comparant un résultat de détection d'un capteur de chute (8, 9, 10, 11, 12, 13, 14, 15) avec un résultat de référence défini et, dans le cas où le résultat de détection ne coïncide pas avec le résultat de référence, constate un dysfonctionnement du capteur de chute (8, 9, 10, 11, 12, 13, 14, 15), le dispositif de calcul (5) comparant pendant un déplacement de l'appareil de travail du sol (1) successivement dans le temps par le même capteur de chute (8, 9, 10, 11, 12, 13, 14, 15) et, dans le cas où les distances (a) sont identiques, constate un dysfonctionnement du capteur de chute (8, 9, 10, 11, 12, 13, 14, 15), et/ou dans lequel le dispositif de calcul (5) comparent un résultat de détection d'un capteur de chute (8, 9, 10, 11, 12, 13, 14, 15) avec un résultat de détection d'au moins un autre capteur de chute (8, 9, 10, 11, 12, 13, 14, 15) qui suit le capteur de chute (8, 9, 10, 11, 12, 13, 14, 15) dans le sens de la marche, et, dans le cas où le capteur de chute en aval (8, 9, 10, 11, 12, 13, 14, 15) détecte une pente (16) sans que le capteur de chute en amont (8, 9, 10, 11, 12, 13, 14, 15) a détecté la pente (16), constate un dysfonctionnement du capteur de chute en amont (8, 9, 10, 11, 12, 13, 14, 15), l'appareil de travail du sol (1) continuant d'abord à fonctionner, à condition que le capteur de chute en aval (8, 9, 10, 11, 12, 13, 14, 15) prenne maintenant en charge la fonction de sécurité du capteur de chute en amont défectueux (8, 9, 10, 11, 12, 13, 14, 15).
